# EUROPEAN PATENT SPECIFICATION

(11) **EP 2 989 056 B1**
(45) Date of publication and mention of the grant of the patent: **24.02.2021**
(21) Application number: 13882945.2
(22) Date of filing: 29.04.2013
(51) Int. Cl.: C01G 49/00, B82B 1/00, B82Y 99/00, C02F 1/58, C02F 1/62, B01D 53/64, B01D 53/70, C02F 101/20, C02F 101/30, C02F 101/36, B01J 13/00

(54) **PROCESS FOR THE PREPARATION OF A NANOIRON SUSPENSION**
VERFAHREN ZUR HERSTELLUNG EINER NANOEISENSUSPENSION
PROCÉDÉ DE PRÉPARATION D'UNE SUSPENSION DE NANOPARTICULES DE FER

(30) Priority: 26.04.2013 HU P1300265
(43) Date of publication of application: 02.03.2016
(73) Proprietor: Auro-Science Consulting Kft., 1031 Budapest (HU)
(72) Inventor: SOÓS, Miklós, H-2000 Szentendre (HU); ORMAY, Tamás, H-6728 Szeged (HU)
(74) Representative: Molnar, Istvan
(86) International application number: PCT/HU2013/000038
(87) International publication number: WO 2014/174328

(56) References cited:
- EP-A2- 1 645 343
- WO-A2-2005/016828
- FR-A1- 2 937 634
- RU-A- 2008 146 934
- US-A- 5 122 279
- US-A1- 2004 007 524
- US-A1- 2006 083 924
- US-A1- 2007 022 839
- US-A1- 2008 034 921
- US-B1- 6 242 663

## Description

### Subject matter of the invention

The disclosure relates to an iron suspension, which comprises solid iron particles in the nanometer size range, which is prepared from ferrous-sulphate (FeSO₄) or hydrated ferrous-sulphate (FeSO₄×7H₂O); hydrated copper-sulphate (CuSO₄×5H₂O); sodium-ditionite (Na₂S₂O₄) and sodium-borohydride (NaBH₄) as reducing agents; sodium-hydroxide (NaOH); and optionally one or more additive(s) selected from the group consisting of polyvinyl-pirrolidone, preferably PVP-K30 or PVP-K90, and as co-metal PdCl₂x2H₂O. Furthermore, the invention relates to a process for the preparation of the iron suspension according to the disclosure, comprising the steps of forming of an aqueous solution comprising: a) aqueous ferrous-sulphate (FeSO₄) or hydrated ferrous-sulphate (FeSO₄×7H₂O); sodium-ditionite (Na₂S₂O₄); sodium-borohydride (NaBH₄); sodium-hydroxide (NaOH) and hydrated copper-sulphate (CuSO₄×5H₂O) starting materials; and optionally one or more additive(s) selected from the group consisting of polyvinyl-pirrolidone, preferably PVP-K30 or PVP-K90, and as co-metal PdCl2x2H2O; b) reaction of the the reaction mixture according to step a) for 1 hour; and c) obtaining of the suspended product.

The process of the invention is as described in the claims.

Furthermore, the disclosure relates to the use of the iron suspension according to the disclosure for decontamination, preferably for the decontamination of soil, water, waste water or gas mixtures.

### The technical field

The reactivity of particles of some ten nanometres size shows considerable differences as compared both to the block-phase materials, and the individual atoms and molecules. With the better and better methods for the preparation, visualization, characterization and modeling of the nanoparticles, new opportunities arise to control the rate and product-distribution of chemical reactions. One of the most important field, where the "finetuning" of the characteristics of materials may be exploited is the remediation of environmental contaminants. Nanotechnology may play important role also in the production and storage of energy, as well es in water management, medical biology, optics and electronics. A nanoparticle may also take part in different chemical processes as a reactant. The best example for this is the zero-valent iron (ZVI), which can reduce various contaminants. The features of the metallic iron nanoparticles generally may be linked to the small size of the nanoparticles. In case of a ZVI being in the nanometric size range (nZVI), the magnetic characteristics are particularly important, which may consitute the basis of a number of applications. In the utilization of the iron nanoparticles it is a problem that the particles in particular tend to aggregate, which in part is due to the magnetic interactions between them.

However, this process has to be controlled to be able to successfully utilize the nZVI in any of technological field.

The zero valent iron - either the nanoparticle, or iron with larger particle size - represents the most promising basis for those kinds of remediation technologies, which aim the decontamination of chlorinated hydrocarbons, reducible inorganic anions and heavy metals that may be found in the underground water. The application of iron nanoparticles (nZVI) carries a number of benefits, because on one hand they possess higher reactivity as compared to the micron sized particles, on the other hand it is much easier to target them to the location of the contamination; this has to date been confirmed by a number of field investigations [Quinn, J., et al., Environ. Sci. Technol., 2005. 39: p. 1309-1318., Elliott, D.W. and W.X. Zahng, Environ. Sci. Technol., 2000. 35: p. 4922-4926.].

The electric, optical, magnetic or even chemical characteristics of the nanoparticles, the size of which ranges between 1 and 100 nm, significantly differ from the features discovered and known in case of block phase materials. Another important feature of these materials is that the characteristics listed change with the size, shape and composition of the particles. For example, the reactivity of a small cluster consisted of transition metal atoms significantly exceeds the reactivity of the same metal in block phase, and this reactivity may change by multiple magnitudes with the size of the cluster. The atoms of materials, which do not show magnetic characteristics in block phase, become magnetic when they form a cluster, and the nanocomposites show high magnetic resistance, increased residual magnetism and other magnetic features. These recently experienced phenomena may point to the fact that it is possible to prepare a material from e.g. clusters of nanoparticles, in which the desired combination of the features may be designed.

One of the most important questions is how the geometric arrangement of the atoms and its stability change in view of the decrease of the size. Starting from the block phase and decreasing the size of the particles, the most important change is that the proportion of the surface atoms increases as compared to the overall number of the atoms, therefore, the surface pressure, as well as the distance between the atoms also changes. The decrease of the inter-atom distance, and the increase in the surface area per volume have effects on other characteristics of the material. The change in the thermodynamic free energy on the surface will change the chemical potential, as well. This in turn has an effect also on the termodynamic features, among which the most conspicuous is the change of the melting point [Montano, P.A., et al., Phys. Rev. Lett., 1986. 56: p. 2076-2079.]. The large specific surface, the unique geometric arrangement and the electron structure have an effect on the catalytic characteristics, too. For example, the reactivity of clusters with a small number of atoms may change by several magnitudes, while the particle size changes by only a few atoms. The decrease of the particle size exerts the strongest effect on the magnetic features. A material with block phase consists of so called magnetic domains, all of them containing thousands of atomic spins. Within the domain these spins have an organized structure, but the summation spins of the individual domains show different direction. In the course of a ferromagnetic transition a long term magnetic structure is formed, and the summation spin of the individal domains is also organized. Though it may be expected that in very small clusters and nanoparticles in lack of domains and long term organized structures the magnetic features will be less explicit, as a matter of fact this is not true. Either the material shows magnetism in block phase or not, the nanoparticles formed from it will show completely new characteristics for the reason of the so called quantum effects. These changes give rise to a number of applications, e.g. non-volatile magnetic storage, different sensors or permanent magnets. As a result of the size decrease not only the magnetic momentum of the material, but also the magnetic behaviour will change. The nanoparticles are generally smaller than the individual magnetic domains, thus the magnetic momentums will not extinguish each other within the particle, but rather the nanoparticle behaves like one atom with high magnetic momentum. The vector of the magnetic momentum may turn as a result of thermal energy, and the process will be accelerated by the increase of temperature. In case of macroscopic particles this means that the material becomes paramagnetic instead of ferromagnetic. In case of nanoparticles the thermal effect is amplified, and above a given temperature (blocking temperature) the magnetic momentum is randomly fluctuated, and the nanoparticle behaves like a paramagnetic atom with high magnetic momentum. This is called superparamagnetic behaviour [Goldstein, A.N., Handbook of Nanophase Materials. 1997, New York: Marcel Dekker, Inc.].

The treatment of the sample, the environmental effects, which may have effect on the features of the micronic and block phase materials, possess high significance in case of the nanoparticles. For example, a solvent may reside in the nanopores, which would have been evaporated from the surface of a block phase material. This residual solvent may later render the study of the nanoparticle difficult. In case of a block phase the surface contamination may be infinitesimal, however, the same amount of a contaminant will principally influence the features in case of a small sized particle. Even the relatively stable nanoparticles change as a result of the environmental effects, since the thermodynamics of the small size systems are highly dependent from their environment [Hill, T.L., Nano Lett., 2001. 1: p. 273-275.]. The size and structure of the nanoparticles, and even their composition depend on the antecedent of the particle and the processing methods. Beside the environmental effects and the antecedent of the particle, it should also be noted that the nanoparticles are in principle dynamics systems. Their shape and structure may change e.g. as a result of an eventual electron or X-ray radiation.

The investigations made by transmission electron microscopy show that the structure of the nanoparticles is not constant as a function of time, but it changes pernanently. This dynamic behaviour may have importance in case of e.g. nanoparticles used as catalysts, since the structural change in time will amend the catalytic activity as well.

The above overview can be considered as the common feature of all of the nanoparticles, however, in case of the iron and other nanoparticles, which in general are also chemically unstable, it should also be noted that they may react with other materials present. This reaction may take place within the particle, such is e.g. the appearance of a surface oxide layer, and the eventual reactions thereof. As a result of the outside oxide layer formed the nZVI particles have a core-shell structure, where the metal with high reactivity is inside the shell, in the core. Such a system is a lot more complicated than the particles consisting of only one metal, especially if we consider how the characteristics respond to the change of the environment and elapse of time [Li, X.Q., D.W. Elliott, and W.X. Zhang, Critical Reviews in Solid State and Materials Sciences, 2006. 31: p. 111-122.].

Beside these phenomena, the particle reacts with its environment as well, and the reaction partner may e.g. be water or an other type of component of the solution, as well as the contaminants present. The time elapsed can be another serious factor here. As the metallic iron is thermodynamically unstable in most of the environments, it may be expected that in the course of a longer term storage oxidation or other types of reactions will take place in the material. Although a small amount of rust does not cause considerable changes in the features of the material in block phase, the same amount of corrosion will significantly change the chemical features of the nanoparticles. While attempts are made to store the iron nanoparticles in an inert environment (closed from oxygen, dry place, vacuum), however, by the progression of time, corrosion can still be experienced.

For example, the nano-iron prepared by pulverization may be considered stable as compared to the particles produced by another method, however, there is no way here either to prepare particles without any oxide coating, which, by the time elapsed, will increase. Iron nanoparticles synthetized in a solution (possessing an oxide shell) were investigated by a surface sensitive method to discover if the oxide coating changes as a result of the contact with air. The result showed that the amount of the oxidated iron increased as early as few minutes passed.

### Description of the state of the art

A number of attempts have been made in the state of the art to synthetize zero valent iron nanoparticles. Two kinds of approaches may be used for the preparation of small sized nanoparticles [Fryxell, G.E. and G. Cao, Environmental Applications of Materials: Synthesis, Sorbents and Sensors. 2007, London: Imperial College Press.]. One of them is the so called top-down solution, where smaller particles are made from larger ones, the other one is the bottom-up method, where the larger particles are made from smaller ones. In case of nanoparticles, the latter is more usual, that is these are self-organizing systems, but in specific cases it is possible to prepare metallic iron nanoparticles in a ball mill. Within the self-orgainizing approach, a number of opportunities may be chosen, such as the synthesis in fluid phase, gas phase or vacuum. In general, the nanoparticles prepared by different techniques will have different shapes, and differences may also be found in the structure of the oxide coating. In the course of a synthesis in vacuum, the preparation of the particles may be controlled and the characteristics of the coating may also be influenced. The coating of the nanoparticles prepared in vacuum or volatile phase is usually a well defined oxide layer. Such particles are the most suitable for us to get to know the basic features of the nanoparticles. However, there is no possibility with this method to produce sufficient amounts e.g. for the removal of environmental contaminations. Therefore, for this purpose a solution based synthesis or the hydrogen reduction of the oxide nanoparticles should be chosen. In this case, however, nanoparticles are yielded that do not have uniform shape and size, furthermore, they contain contaminants, which remained from the synthesis.

In the volatile phase synthesis of the nanoparticles such reaction conditions have to be achieved that the volatile phase mixture be thermodynamically unstable as compared to the solid particles.

In general this requires over-saturated steam. If the over-saturation is sufficiently high, furthermore, the condensation is not hindered by anything from reaction kinetics point of view, nucleation starts. For the reason of the residual over-saturation the volatile phase molecules either condensate or react on the surface, which results in the increase of the nanoparticles.

Therefore, if the purpose is the preparation of a small sized nanoparticle, considerable over-saturation is needed to achieve high nucleation density, then the system should immediately be quenched either by the removal of the volatile's source, or by slowing down the process to hinder the growth of the centres. In most cases this happens within a few milliseconds, and enables the continuous or quasi-continuous operation.

During the synthesis inside a flame the heat produced by the burning processes taking place inside the flame is used for the preparation of the particles. As the formation of the nanoparticles is connected to the reactions taking place inside the flame, it is a chemically very complicated system, which is very difficult to be controlled. This method is basically useful for the preparation of oxides, as there is a highly oxidative environment within the flame.

The chemical volatile phase synthesis resembles the chemical volatile phase disjoint (CVD), where thin solid layers are formed onto different surfaces. The volatiles of the precursor are led into a reactor with heated walls, into conditions that are favourable for the formation of particles instead of the formation of a thin layer. This process may be used in the formation of a variety of materials, and its flexibility is further increased by the high number of precursors used in the CVD process, which may also be advantageously used in the synthesis of nanoparticles.

The precursor at room temperature may be solid, liquid or gas, but it always enters the reactor in volatile state (bubbled or sublimated).

Among the physical volatile phase synthesis (or physical volatile deposition) processes the most important are the inert gas condensation, the pulsed laser deposition, the spark discharge preparation and the pulverizer gas aggregation. The inert gas condensation is especially suitable for the preparation of metal nanoparticles, since a number of metals is evaporated with an appropriate rate at a temperature, which is still relatively simply achievable. The steam produced by the evaporation of a solid material is mixed with the cold gas and this leads to the condensation of the solid particles. If the gas used as cold gas reacts with the evaporated metal, then other types of nanoparticles may also be prepared, e.g. by entering oxygen a metal oxide is produced. In case of the pulsed laser deposition the saturated steam is produced by a pulsed laser. Although only much smaller amounts of the nanoparticles can be prepared by this method, those materials can also be evaporated in case of which the conventional heating would be insufficient. By generating a spark discharge, the steam of a metal may be produced if the metal in question is used as an electrode, and in the presence of the inert gas the voltage is increased until the discharge value. The electric arc produced between the two electrodes evaporates some metal. By this method relatively small amount of nanoparticles can be produced, however, it is a relatively better reproducible synthesis.

The pulverizing gas aggregation can be used for the deposition of metal iron nanoclusters, for which the magnetron-pulverizer and the gas aggregation techniques are combined. The iron atoms coming from the pressurized magnetron pulverizer are impacted with Ar atoms in a water-cooled gas aggregation chamber, which slack them up. The average particle size may be varied between 1 and 100 nm by changing the aggregation distance, the performance of the pulverizer, the pressure of the aggregation tube or the proportion of the flowing rate of the He and Ar gases.

All of the above methods require extreme reaction conditions, therefore their upscaling utilization in the environmental technologies is either impossible, or uneconomical.

In the circle of the solution phase synthesis one of the oldest methods for the preparation of nanoparticles - especially in case of catalysts - consisted of wetting of the surface of a solid support with the solution of a compound of the metal in question, then the removal of the solvent, and contacting the metal ions with the reagent needed for the preparation of the desired nanoparticle (metal, metal oxide or metal sulphide). The morphology of the produced particles is affected by a number of factors, such as the salt of the metal, the solvent, the ionic strength of the solution and the temperature. Typically micrometer sized, polydisperse particles can be prepared by this method. Attempts were made to reduce iron ions with sodium-borohydride in a solution phase, to yield zero valent iron, which precipitates from the solution. By one of the methods the starting material was ferric(III)-chloride (chloride method), by two other the starting material was ferrous (II)sulphate (sulphate method). However, none of the methods discussed above is suitable for the preparation of nano-iron possessing the composition and features according to the present invention.

Micelle techniques include beside the normal "oil-in-water" type microemulsions the inverse, "water-in-oil" systems, as well. The internal diameter of such nanoreactors is around 50 nm. In order to prepare normal or inverse micelles a surfactant (amphiphilic) is solved in the continuous phase, then the liquid to be dispersed is added. Thus a thermodynamically stable, transparent, homogeneous system is prepared. The disperse system comprises monodisperse drops, the size of which ranges from nanometres to hundreds of nanometres. The size and shape of the drops are determined by the proportion of the surfactant contained by the system as compared to the dispersed phase. The nanoparticles prepared in inverse micelles are usually monodispersed, however, the deposition and collection of the particles may be problematic, since the particles prefer the suspended state in such conditions. The methods for the collection of the particles - such as e.g. the destabilization of the micelle - lead on the other hand to the aggregation of the particles. The surface of the individual particles produced by any of the micelle techniques is therefore always occupied by a surfactant.

Either in a batch, or in continuous mode, the hydrothermal synthesis is suitable for the preparation of nanocrystalline materials in gramm amounts. In this case the reaction is performed using an aqueous metal salt solution at an elevated temperature and pressure. In the course of the reaction a metal oxide can be prepared as a result of the hydrolysis of the metal ion.

In all methods discussed above - both in steam, and in solution phase - particles may be produced that can be further processed. In the processing care should be taken to avoid the increase of the particle size. The residual materials remained from the processing and synthesis may significantly influence the shape and surface chemistry of the particles.

Using a microemulsion method, iron nanoparticles were prepared, in which the average particle size remained under 10 nm, which is much smaller than the average diameter of the nanoparticles synthetised in a solution. The oil phase of the V/O (inverse) system was constituted by n-octane, the surfactant was cetyl-trimethyl-ammonium-bromide, and the co-tenside was 1-butanol. To the above mixture 0.1 M aqueous solution of FeCl₃^{∗}6H₂O was added. The X-ray diffraction measurements showed that both the solution phase and the microemulsion methods resulted in amorphous nanoparticles, as no peak with significant intensity was identified in the diffractograms, which could indicate crystalline phase.

In the American patent application No. US 2006/0083924 a process is described for producing a nanoscale zero-valent metal (e.g. iron), including the reduction of a metal ion solution with a dithionite compound, wherein the reduction is carried out under alkaline conditions. The described zero-valent metal is used for the remedation of contaminated water. Although, NaOH is mentioned in the cited document, however, it is used only to provide the alkaline conditions. In contrast, in the production of the iron suspension according to the present invention NaOH is used not only to adjust the pH into the alkaline range, but used as a reactant, as it is disclosed later. Moreover, the use of NaBH₄ as a reducing agent is not suggested by the cited document due to its some disadvantages expressly disclosed in the cited document. In contrast, the use of NaBH₄ as a reducing agent in combination with Na₂S₂O₄ is an essential feature of the present invention, as it is disclosed later.

The technical problem to be solved by the invention

A practical problem in connection with the nanoparticles is their tendency to aggregate, and - accordingly - difficulties in achieving their stability. The colloide particles - as it is expectable from their size - possess much larger specific surface as compared to the block phase materials. Therefore in such particles much higher proportion of the atoms or molecules can be found on the interface of the particle and the environment as compared to the block phase materials. Such atoms/molecules are affected from the two types of media by different forces, therefore their features (energy, coordination number, the arrangement of the atoms, molecular conformation) will be different from that of the block phase atoms/molecules. An important problem to be solved is to find what kind of practically feasible conditions are required to preserve the dispersion of the particles of the suspension containing nanoparticles.

The elemental iron nanoparticles (nZVI) efficiently decontaminate the different chlorinated organic compounds, absorb the heavy metals found in the underground water [Zhang, W.X., J. Nanoparticle Res., 2003. 5: p. 323-332., Liu, Y., et al., Environ. Sci. Technol., 2005. 39: p. 1338-1345., Ponder, S.M., J.G. Darab, and T.E. Mallouk, Environ. Sci. Technol., 2000. 34: p. 2564-2569.].

Thanks to the large specific surface and reactivity the nZVI offers a good opportunity for *the in situ* remediation of the contaminants, which can be reduced with Fe⁰. However, its big reactivity in itself does not enable nZVI for the *in situ* application. It is also important that an aqueous phase dispersion be easy to be prepared from nanoparticles, thus, they reach the contamination through the water-filled porous media. To achieve this, the mobility of the nZVI particles is insufficient, as the unstable nZVI particles can migrate only a few centimetres in such a medium. [Schrick, B., et al., Chem. Mater., 2004. 16: p. 2187-2193.]. This may be explained by two reasons: the nZVI is linked to the material of the water storing layer, or the pores are blocked as a result of the aggregation of the particles and the following gelation.

The state of the art is not free of challenges. [Müller, N.C. and B. Nowack, Nano zero valent iron - THE solution for water and soil remediation? Report of the ObservatoryNANO. available at www.observatorynano.eu. (October 18, 2010.). 2010.]. The following aspects should be addressed to be able to elaborate valuable remediation technologies based on nZVI: a) the passivation of iron; b) the agglomeration of the particles; c) better insight in the mechanisms, abiotic and biotic decomposition; d) mapping of the movement of the particles; e) the production of hydrogen, which decreases the permeability; f) accumulation of the intermediates, e.g. DCE; g) transferring of the laboratory experiments to the field: a great number of factors should be considered, e.g. hydrological, geological, microbiological aspects; and h) the device needed for the admixing and injection of nZVI. Accordingly, the state of the art failed to provide a solution (material, process and device), which is:
a) simple,
b) does not require extreme conditions, can be practiced outside the laboratories, in the fields;
c) economical, and
d) scalable;
   resulting in a nano iron, which is
e) stable,
f) free of aggregation and
g) free of oxides.

As the nanoparticles easily react with the surrounding materials that tend to be reduced, if prolonged period of time has passed between the preparation and usage, the activity of the suspension continuously decreases. This leads to the fact that storage of the active material and the long distance transportation thereof are not only uneconomical, but also decrease the efficiency of the produced active agent. There is therefore a need for the design of a new production line, which may be suitable for the preparation of the active agent *in situ* in an amount that is sufficient for the decontamination of even an industrial scale contamination. To overcome the above problems and satisfy the above need, we have done systematic experimental work, and as a result of this, completed our invention.

### Detailed description of the invention

In its first aspect the disclosure relates to an iron suspension comprising solid iron particles in the nanometer size range that is prepared from ferrous-sulphate (FeSO₄) or hydrated ferrous-sulphate (FeSO₄×7H₂O); hydrated copper-sulphate (CuSO₄×5H₂O); sodium-ditionite(Na₂S₂O₄) and sodium-borohydride (NaBH₄) as reducing agents; sodium-hydroxide (NaOH); and optionally one or more additive(s) selected from the group consisting of polyvnyl-pirrolidone, preferably PVP-K30 or PVP-K90, and as co-metal PdCl₂×2H₂O.

In a preferred embodiment the concentration of the iron suspension according to the invention is 1000, 3000, preferably 5000 or 10000 ppm (mg/dm³).

The iron suspension according to the disclosure in one embodiment comprises as additive 1 g polyvinyl-pirrolidone based on 1 ppm concentration.

In one embodiment of the disclosure the weight proportion of the components is the following: FeSO₄:Na₂S₂O₄:NaOH:NaBH₄:CuSO₄ = 5:3,95:2,25:0,068:0,26, and the amount of PdCl₂×2H₂O is 1,0-0,01% based on the moles of the metal iron, however, the disclosure is not limited to this specific composition.

In one embodiment of the disclosure the molar proportion of the components is the following:
FeSO₄:Na₂S₂O₄:NaOH:NaBH₄:CuSO₄ = 17,98:22,68:56,26:1,80: 1,04, however, the disclosure is not limited to this specific composition.

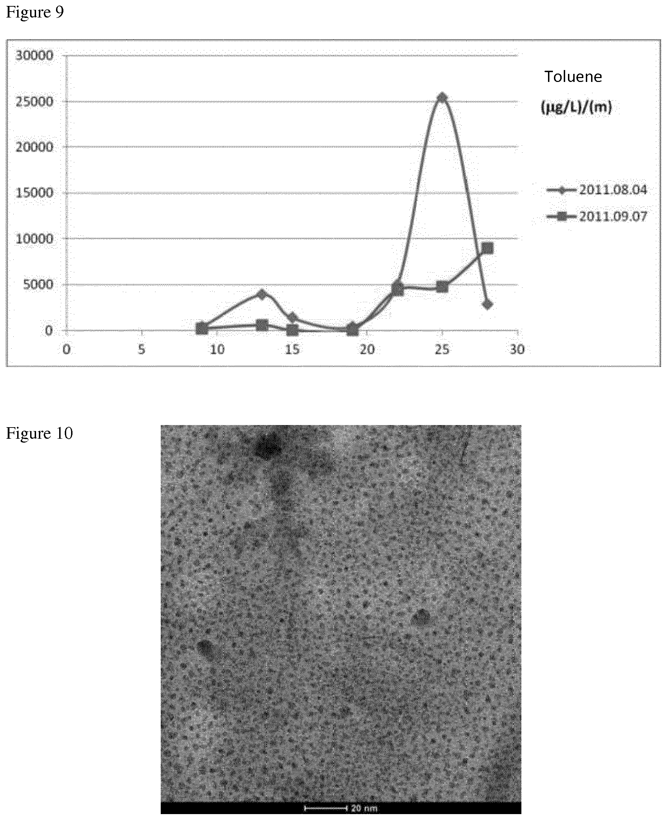

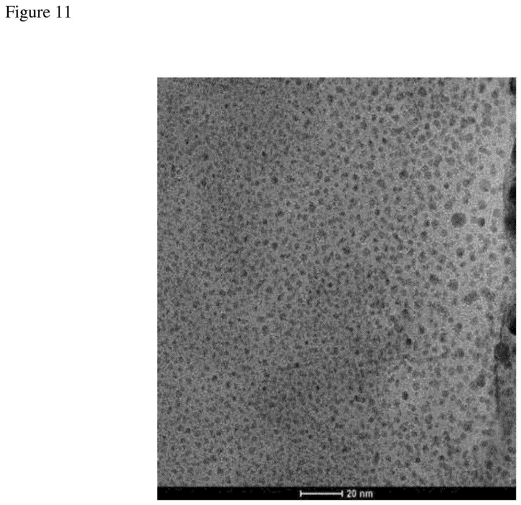

Fig. 10-11. show the results of the microscopic measurements of the prepared material, where Fig. 10-11. illustrates the TEM recordings of the produced nano-iron suspension.

The nano-iron suspension is an aqueous system containing solid iron particles. This makes it possible to utilize the suspension directly, since it is a requirement to possess a dilute, aqueous system, for the reason that it is intended to be used - among others - for the treatment of underground water, and it is to be passed down to different depths. In the course of the preparation the reaction conditions require aqueous media, thus the product will be yielded in water, and there is no need for the separation of the end product, washing, or any other additional treatment prior to the injection.

The system according to the disclosure is flexible from the point of view of the specific parameters of the end product. Depending from the level of contamination of the area to be treated, the concentration of the end product may range in a wide spectrum, where the proportion of the specific starting materials and the reaction conditions can freely be selected. By this a very multifunctional system is achieved, which is suitable for the solution of not in particular one specific problem, but rather - depending from the conditions and adopting them
- the production of the most appropriate active agent.

The present invention relates to a process for the preparation of the aqueous iron suspension comprising solid iron particles in the nanometer size range, comprising the steps of:
a) an aqueous solution comprising as starting materials aqueous ferrous-sulphate (FeSO₄) or hydrated ferrous-sulphate (FeSO₄×7H₂O); sodium-ditionite (Na₂S₂O₄); sodium-borohydride (NaBH₄); sodium-hydroxide (NaOH) and hydrated copper-sulphate (CuSO₄×5H₂O) is prepared; and optionally one or more additive(s) selected from the group consisting of polyvinyl-pirrolidone, preferably PVP-K30 or PVP-K90, and as co-metal PdCl₂×2H₂O;
b) the reaction mixture according to step a) is reacted for 1 hour, optionally with stirring; and
c) the suspension-like product is obtained, and optionally the process is one or more times repeated.

In one embodiment of the process according to the invention step a) is proceeded in such a way that
a) the ferrous-sulphate, previously or optionally during the dissolution bubbled with N₂ gas and optionally copper-sulphate is measured into a tank optionally equipped with stirrer and relief valve;
b) the sodium-hydroxide is measured into a tank optionally equipped with stirrer and relief valve, which is separated from the tank mentioned in point a);
c) the sodium-borohydride simultaneously with or separated in time from, preferably prior to the sodium-ditionite, is dissolved in a tank optionally equipped with stirrer and relief valve, optionally simultaneously with the steps according to points a) and b);
d) optionally the additives are added to the reaction mixture at any of steps a) to c);
e) following the dissolution according to points a) to d) the content of the tanks according to points a) to c) is transferred to an optionally stirred main reactor, preferably by pumping, preferably in such a way that first the ferrous-sulphate, and optionally the copper-sulphate, then the sodium-hydroxide, then, preferably a few minutes later, the solution according to point c) is charged into the main reactor;
f) the reaction mixture according to step e) is reacted for approximately 1 hour;
g) the reaction mixture according to step f) is transferred, preferably by pumping into an optionally stirred product tank, from where the product is preferably in one hour obtained; and
h) if desired, the steps according to points a) to f) are one or more times repeated.

There are a number of ways for the preparation of the nano-iron suspension according to the disclosure. The system is flexible, since it is applicable not only for one specific synthesis, but in case of the development of the technology, it remains suitable for the production without transmogrification. In the present case, among the variable opportunities, the following economical and efficient system is disclosed, however, the disclosure is not in any way limited thereto.

The basic starting materials are the following: hydrated ferrous-sulphate (FeSO₄×7H₂O); sodium-ditionite (Na₂S₂O₄); sodium-borohydride (NaBH₄); sodium-hydroxide (NaOH) and hydrated copper-sulphate (CuSO₄×5H₂O).

The ferrous-sulphate is a relatively cheap, easily reducible iron-salt. For the reason of environmental concerns it has importance which starting salt is chosen, thus, finally ferrous-sulphate was selected. The hydrated form is cheaper than the dehydrated form, furthermore the work is done in aqueous phase, thus it does not disturb the system.

Sodium-ditionite and sodium-borohydride are reducing agents. Probably this is the most problematic point of the design of the reaction according to the invention, as a weak reducing agent would be unsuitable for the production of elemental iron. The stronger reducing agents may be dangerous, and it is important, what kind of decomposition products are formed after the reaction, furthermore, as always, thrift should also be considered. The borohydride is not cheap, however, it is an excellent reducing agent. By using it in a smaller proportion, producing a strongly reductive condition, a part of the iron takes the elemental form (Fe⁰). The majority of the overall amount of the reducing agent is, however, consisted of sodium-ditionite. This material is cheap, and it produces the elemental iron in a slightly slower rate though, the process started by the sodium-borohydride is continued by sodium-ditionite more easily, furthermore, using a small excess as compared to the desired amount (20 percent excess), it stabilizes the system, because remaining in the solution after the injection, it will be able to produce elemental iron.

Sodium-hydroxide plays an important role from a number of point of views. Reduction with sodium-hydroxide takes place at alkaline pH, thus, the acidic pH of the ferrous-sulphate solution is aligned to an appropriate value, making the reaction possible. On the other hand, the sodium-ditionite is unable to produce elemental iron from by the reduction of ferrous-sulphate, but rather said reaction takes place from ferrous-hydroxide (Fe(OH)₂) produced from the reaction of ferrous-sulphate and sodium-hydroxide.

Similarly to the iron, the copper-sulphate is a good reducing agent of contaminants, however, cannot be used in such an amount as the iron can be, thus it is given to the system as an additional metal in a proportion of 5 to 10 % (as compared to the iron) in order to increase the efficiency.

In general, all of the starting materials excellently dissolve in water. As the whole reaction line takes place in an aqueous environment, the first step is the dissolution of the materials. The ferrous-sulphate and sodium-hydroxide may be dissolved simultaneously, with the only difference that the solution of ferrous-sulphate before and during the dissolution is bubbled with N₂ gas. By this operation the water is deoxygenated, which is necessary, because the elemental iron, which is highly active, almost immediately reacts with the oxygen content of the water, during which some kind of ferrous/ferric oxide is produced, which is useless in the decontamination. After the complete dissolution, the sodium-hydroxide solution is added to the above solution, simultaneously with the previously dissolved sodium-borohydride solution, slowly. During the reaction black-greenish, precipitate-like system is formed, which indicates on one hand the presence of elemental iron produced by the borohydride, on the other hand the presence of the forming ferrous-hydroxide. During the stirring, the sodium-ditionite may also be dissolved, which also easily and quickly dissolves, however, it starts immediately (slowly) decomposing in water, which is a disadvantage for us, as it cannot take part in the reduction, therefore it seems to be reasonable to add sodium-ditionite in small excess amounts. After the complete dissolution, this solution may also be given to the well stirred ferrous-hydroxide solution with permanent stirring. Thus, the entire iron content will exist in elemental form. This requires approximately one hour reaction time, which is not a bottleneck, as the production line has been designed in such a way that this reaction time be equivalent with the yield, thus the injection can be done continuously.

Once the reaction time has passed, a slurry-like suspension is obtained, which is a product containing nano-iron. This may directly be led into a device which is suitable for injection, and can be passed under ground.

In another aspect, the disclosure relates to the use of the aqueous iron suspension comprising solid iron particles in the nanometer size range according to the disclosure for decontamination, preferably for the decontamination of water, waste water, or gas mixtures, more preferably for the removal of chlorine containing organic materials, heavy metals, and radionuclides, more preferably for the decontamination of poly-chlorinated biphenyls (PCB), solvents and chemical raw materials, such as perchloro-ethylene (PCE), trichloro-ethylene (TCE), carbon-tetrachloride (CT) and vinyl-chloride (VC), benzene, toluene, pesticides, especially DDT, a nitro-aromatic compounds or perchlorates.

In the following, the invention is illustrated by way of examples, which, however, are not in any way intended to limit the scope of the invention.

The production line may be designed in such a way that it is able to produce the material according to the disclosure in the highest possible amount, however, it is still suitable to be placed onto a truck trailer or a compartment of a truck. By this the system may be transferred to the centrum of the contaminated area, and the material can be produced on the spot. This needs first of all electricity, which may be provided by an aggregator or may be produced by the transporting vehicle itself, which increases the mobility, and overcomes the problem of dependence from the sources of the electric network. Another precondition is the permanent water supply. This may be done using running water, filtered well-water, or water transferred by a sevice unit. If these resources are at disposal, from the above-mentioned starting materials the end product can be prepared in the desired amount.

Using the production line according to the disclosure, in line with the above description, a suspension with the desired concentration may be prepared. To achieve this, only the amount of the added materials should be changed, but it is possible to prepare an even more concentrated solution, and diluting it with water, any kind of concentrations can be ensured. In the following Table 1 the chemical need of some exemplary concentration is disclosed.

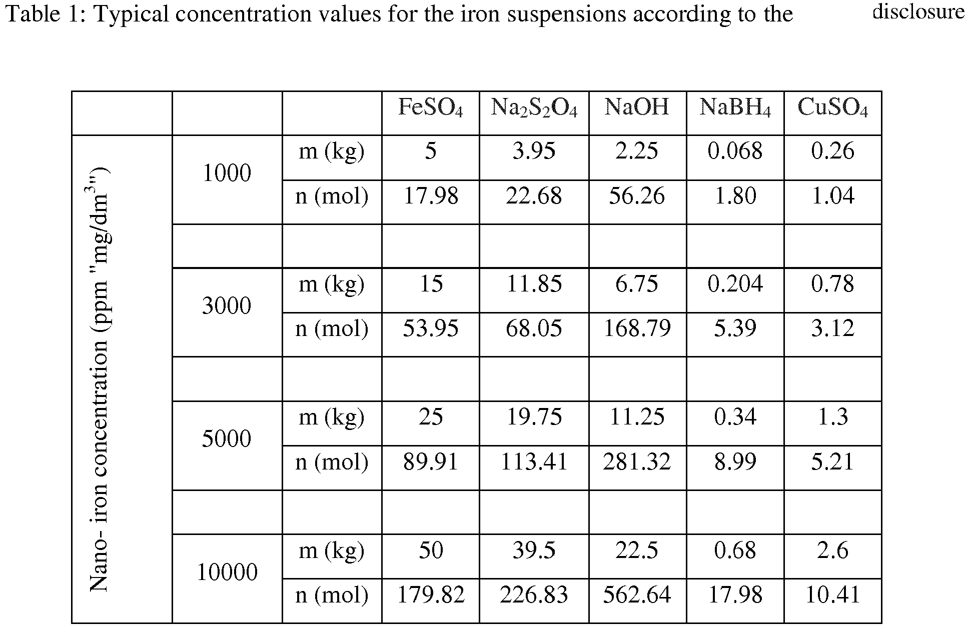

The effectiveness of the nano-iron suspension according to the disclosure is illustrated by the following examples. In the examples the analysis of the effects of nano-iron suspensions with 10000 ppm concentration was made after the injection of 2×3 m³ active agent. In the course of the experiments a complex experimental plan was followed from the laboratory tests, until the analysis of the effectiveness of the field tests. During the preliminary laboratory tests, after the determination of the appropriate composition, the exact composition of the prepared suspension, the efficiency of the preparation and the reaction conditions were optimised. The results were tested first in a laboratory, then in possession of the acceptable results the designed upscaled suspension was prepared and tested in the predetermined test fields. In the experiments a sample was chosen that was more contaminated than the average, then in the field 6 m³ nano-iron suspension was prepared and injected under ground into different depths, in 2 parts (3-3 m³). To follow the results, underground water samples were taken from the treated area before the treatment, and one month afterwards. The results received were in line with the preliminary laboratory values, the prepared suspension was proven to be effective, which is best shown by the singificant decrease of the overall concentration of the chlorinated hydrocarbons. In summary, the average residual amount for every tested contaminants was 40.51 % of the starting value.

### Preliminary laboratory tests

The results of the preliminary laboratory tests are illustrated in the following tables. Prior to the field tests, and after the development work has been finished, products with the selected composition and preparation process were tested by preparing 4 parallel sample lines, treating 4 different underground water samples.

**Table 2: The results of the preliminary laboratory tests I.**

| A-serie | | | |
|---|---|---|---|
| *Contaminant* | *Efficiency* (%) | | |
| | *X5 nZVI excess* | *X10 nZVI excess* | *X30 nZVI excess* |
| *VOCl* | *47.30* | *50.95* | *69.09* |
| *TCE* | *43.58* | 44.62 | 74.49 |

**Table 3: The results of the preliminary laboratory tests II.**

| B- serie | | | |
|---|---|---|---|
| *Contaminant* | *Efficiency* (%) | | |
| | *X5 nZVI excess* | *X10 nZVI excess* | *X30 nZVI excess* |
| *VOCl* | *60.51* | *61.98* | *75.23* |
| *TCE* | *62.98* | *66.18* | *79.30* |

**Table 4: The results of the preliminary laboratory tests III.**

| C-serie | | | |
|---|---|---|---|
| *Contaminant* | *Efficiency* (%) | | |
| | *X5 nZVI excess* | *X10 nZVI excess* | *X30 nZVI excess* |
| *VOCl* | *64.40* | *70.87* | 89.88 |
| *TCE* | *63.57* | *69.79* | *81.28* |

**Table 5: The results of the preliminary laboratory tests IV.**

| D-serie | | | |
|---|---|---|---|
| *Contaminant* | *Efficiency (%)* | | |
| | *X5 nZVI excess* | *X10 nZVI excess* | *X30 nZVI excess* |
| *VOCl* | *46.44* | *54.22* | *63.37* |
| *TCE* | *66.98* | *71.99* | *72.97* |

As the contaminant contents of the different underground water samples may have differed from each other, we received significantly not different results with a slight deviation. These were tested for the values of TCE (trichloro-ethylene) and VOCl (volume of overall chlorinated hydrocarbons). The excesses mean the excess needs as compared to the theoretical nano-iron requirement (if it is presumed that one iron atom can take part in one dechlorination cycle).

The results show our advanced nano-iron suspension decomposed the majority of the contaminants in one day. It can also be seen that the higher excess of the iron applied does not show a proportionally better result; this may be explained by the time consuming character of the decontamination process, it may last even for several weeks, which cannot be accelerated by the addition of higher amounts (in some cases this may result in unwanted extra costs).

### In-situ chemical reduction (ISCR) field test (Törökszentmiklós, Hungary)

Three monitoring points were established in the test field (three channel CMT wells at each point, filtering different depth spaces). With the help of the monitoring points filtering different depths, the concentration change of the contaminant can be monitored. No injection point was needed, as the most efficient injection method for the *in situ* chemical decontamination is the spear injection, thus injection could be done in one point, but in different depth.

**Table 6: Filtering of the CMT wells**

| POINT OF SAMPLE COLLECTION | 1. | 2. | 3. |
|---|---|---|---|
| Filtering depth space (m) | 1. channel: 21.5-22.0 | 1. channel: 13.0-13.5 | 1. channel: 4.0-4.5 |
| | 2. channel: 24.5-25.0 | 2. channel: 15.0-15.5 | 2. channel: 6.0-6.5 |
| | 3. channel: 27.0-28.0 | 3. channel: 18.5-19.0 | 3. channel: 9.0-9.5 |

The measurement of the baseline conditions consisted of the following investigations: measurements of the level of the underground water, VOCl, BTEX and chlorobenzene analytics, AVK measurements in 3 sample collection points, total Fe content measurement. The injection of the field was followed by the monitoring. The parameters to be measured included the following: measurements of the level of the underground water, VOCl, BTEX and chlorobenzene analytics, AVK measurements in 3 sample collection points, total Fe content measurement (photometric measurement, in each sample collection point). The total Fe analyses were made for the reason of the distance effect measuring, thus, the schedule of the soil sample collection monitoring is different for Fe from the measurement of the contamination. The injections had the following plan for the well filtered for different depths: in 24.5-25 m depth, 2×1 m³ 10 000 ppm nano-iron; in 18-19.5 m depth, 2×1 m³ 10 000 ppm nano-iron; in 9-9.5 m depth, 2×1 m³ 10000 ppm nano-iron. The installation of the injection spear took place on the day of the injection. The field test (injection) is as follows: a) admixing of nano-iron; b) injection under pressure, approx. 55 liter/min yield; c) the redox potential changes in the surrounding wells should be monitored in the course of the injection of the nano-iron; d) once the nano-iron injection has been completed, at least 3 m³ water, in the present case underground water, should be injected. To perform the field test, a device is also needed to push the injection spear under ground (25 m depth). The devices necessary for the injection and other field work are as follows. hose-pipes, flow-rate gauge, yield gauge, pumps, Eijkelkamp pump, stirring blade, tap water supply, coveralls, gloves, WTW, redox analyser, sample vials.

### Monitoring of the field test

The redox potential should be continuously measured in the monitoring well during the injections as well. One hour after the completion of the injections (after the injection of water, too) the sample collection takes place. The scheduling of the total Fe measurements is the same as the schedule of the monitoring.

### Evaluation of the results

The graphs taken from the measured materials show the differences between the starting values (blue curve), and the second injection (red curve), respectively, as a function of the sample collection depths (4 to 28 metres). A summarizing table belongs to each graph containing the starting and the last measured values, furthermore the percent decrease of the original concentration (in some cases the increase of the concentration) during the given period of time.

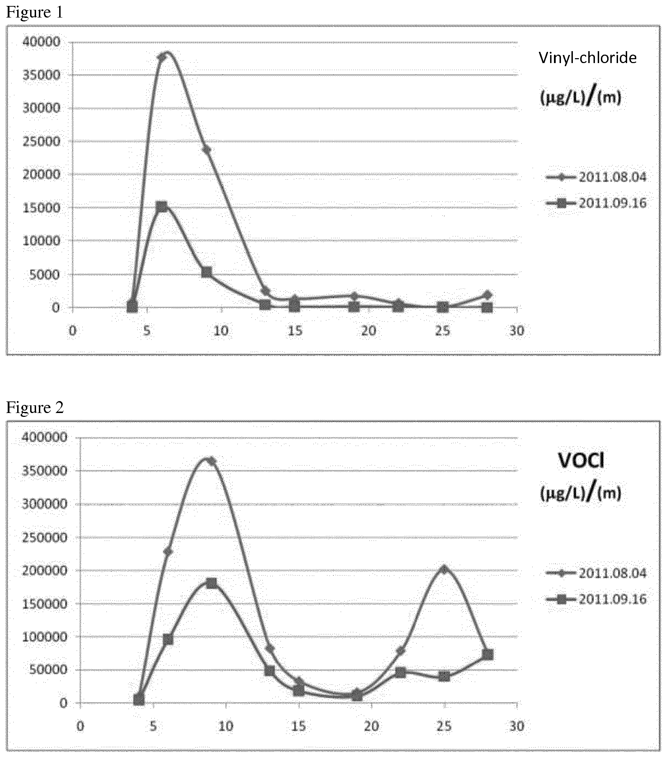

**Table 7: Summarizing data for Fig. 1**

| | Vinyl-chloride g/L) | | | | | | | | |
|---|---|---|---|---|---|---|---|---|---|
| Well depth (m) | 4 | 6 | 9 | 13 | 15 | 19 | 22 | 25 | 28 |
| 2011.08.04 | 858 | 37700 | 23800 | 2550 | 1330 | 1760 | 633 | 108 | 1890 |
| 2011.09.16 | 26 | 15100 | 5310 | 487 | 100 | 169 | 118 | 40 | 87 |
| Residual % | 3.04 | 40.05 | 22.31 | 19.10 | 7.52 | 9.60 | 18.64 | 37.04 | 4.60 |

**Table 8: Summarizing data for Fig. 2**

| | VOClg/L) | | | | | | | | |
|---|---|---|---|---|---|---|---|---|---|
| Well depth (m) | 4 | 6 | 9 | 13 | 15 | 19 | 22 | 25 | 28 |
| 2011.08.04 | 9589 | 228374 | 364181 | 82780 | 32615 | 15720 | 78973 | 201629 | 74358 |
| 2011.09.16 | 4487 | 96878 | 181566 | 48846 | 18743 | 11331 | 46049 | 40353 | 73201 |
| Residual % | 46.79 | 42.42 | 49.86 | 59.01 | 57.47 | 72.08 | 58.31 | 20.01 | 98.44 |

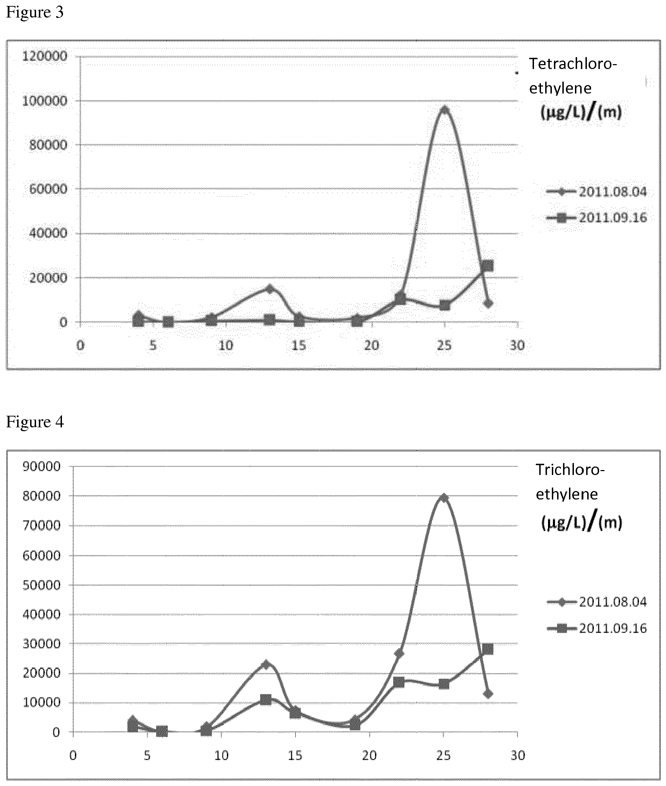

**Table 9: Summarizing data for Fig. 3**

| | Tetrachloro-ethylene (g/L) | | | | | | | | |
|---|---|---|---|---|---|---|---|---|---|
| Well depth (m) | 4 | 6 | 9 | 13 | 15 | 19 | 22 | 25 | 28 |
| 2011.08.04 | 3210 | 14 | 2420 | 14800 | 2640 | 2080 | 12500 | 96000 | 8610 |
| 2011.09.16 | 361 | 1 | 611 | 922 | 345 | 327 | 10100 | 7780 | 25300 |
| Residual % | 11.25 | 7.35 | 25.25 | 6.23 | 13.07 | 15.72 | 80.80 | 8.10 | 293.84 |

**Table 10: Summarizing data for Fig. 4**

| | Tetrachloro-ethylene (g/L) | | | | | | | | |
|---|---|---|---|---|---|---|---|---|---|
| Well depth (m) | 4 | 6 | 9 | 13 | 15 | 19 | 22 | 25 | 28 |
| 2011.08.04 | 4020 | 15 | 1870 | 22900 | 7310 | 4350 | 26700 | 79500 | 13000 |
| 2011.09.16 | 1940 | 190 | 557 | 10900 | 6490 | 2250 | 16800 | 16400 | 28100 |
| Residual % | 48.26 | 1310.34 | 29.79 | 47.60 | 88.78 | 51.72 | 62.92 | 20.63 | 216.15 |

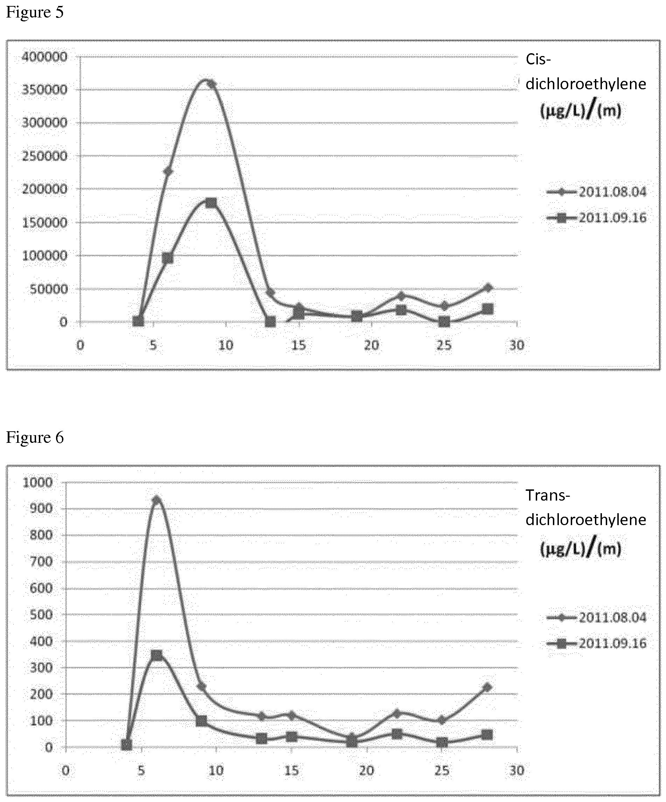

**Table 11: Summarizing data for Fig. 5**

| | cis-dichloro-ethylene (g/L) | | | | | | | | |
|---|---|---|---|---|---|---|---|---|---|
| Well depth (m) | 4 | 6 | 9 | 13 | 15 | 19 | 22 | 25 | 28 |
| 2011.08.04 | 2320 | 227000 | 359000 | 44400 | 22200 | 9190 | 39100 | 24500 | 52300 |
| 2011.09.16 | 1710 | 96200 | 180000 | 87 | 11800 | 8700 | 18500 | 99 | 19100 |
| Residual % | 73.71 | 42.38 | 50.14 | 0.20 | 53.15 | 94.67 | 47.31 | 0.40 | 36.52 |

**Table 12: Summarizing data for Fig. 6**

| | trans-dichloro-ethylene (g/L) | | | | | | | | |
|---|---|---|---|---|---|---|---|---|---|
| Well depth (m) | 4 | 6 | 9 | 13 | 15 | 19 | 22 | 25 | 28 |
| 2011.08.04 | 10 | 932 | 231 | 118 | 121 | 40 | 128 | 104 | 227 |
| 2011.09.16 | 9.8 | 348 | 100 | 34 | 41 | 21 | 51 | 20 | 48 |
| Residual % | 98.99 | 37.34 | 43.29 | 28.64 | 33.97 | 52.12 | 39.84 | 19.23 | 21.15 |

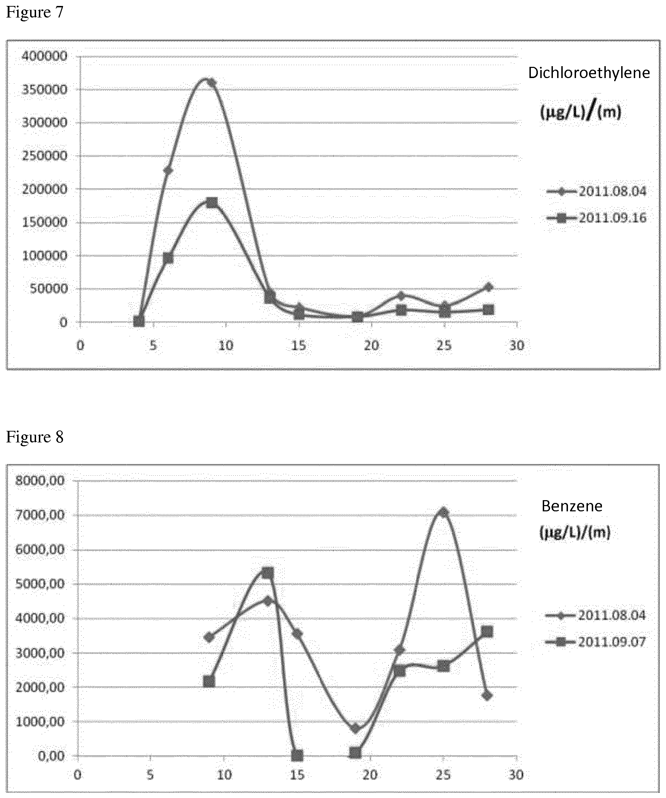

**Table 13: Summarizing data for Fig. 7**

| | dichloro-ethylenes (g/L) | | | | | | | | |
|---|---|---|---|---|---|---|---|---|---|
| Well depth (m) | 4 | 6 | 9 | 13 | 15 | 19 | 22 | 25 | 28 |
| 2011.08.04 | 2335 | 228125 | 359750 | 44549 | 22350 | 9242 | 39253 | 24664 | 52573 |
| 2011.09.16 | 1722 | 96607 | 180298 | 36421 | 11849 | 8724 | 18571 | 15619 | 19168 |
| Residual % | 73.74 | 42.35 | 50.12 | 81.76 | 53.02 | 94.40 | 47.31 | 63.33 | 36.46 |

**Table 14: Summarizing data for Fig. 8**

| | Benzene | | | | | | |
|---|---|---|---|---|---|---|---|
| Well depth (m) | 9 | 13 | 15 | 19 | 22 | 25 | 28 |
| 2011.08.04 | 3460.00 | 4520.00 | 3550.00 | 798.00 | 3090.00 | 7080.00 | 1760.00 |
| 2011.09.07 | 2170.00 | 5330.00 | 12.70 | 102.00 | 2470.00 | 2620.00 | 3610.00 |
| Residual % | 62.72 | 117.92 | 0.36 | 12.78 | 79.94 | 37.01 | 205.11 |

**Table 15: Summarizing data for Fig. 9**

| | Toluene | | | | | | |
|---|---|---|---|---|---|---|---|
| Well depth (m) | 9 | 13 | 15 | 19 | 22 | 25 | 28 |
| 2011.08.04 | 424 | 3920 | 1390 | 442 | 4990 | 25400 | 2860 |
| 2011.09.07 | 224 | 571 | 71 | 79 | 4400 | 4780 | 8950 |
| Residual % | 52.83 | 14.57 | 5.11 | 17.87 | 88.18 | 18.82 | 312.94 |

**Table 16: The amounts of the residual contaminants**

| | The amount of the residual contaminant (%) | | | | | | | | |
|---|---|---|---|---|---|---|---|---|---|
| Well depth (m) | 4 | 6 | 9 | 13 | 15 | 19 | 22 | 25 | 28 |
| Vinyl-chloride | 3.04 | 40.05 | 22.31 | 19.10 | 7.52 | 9.60 | 18.64 | 37.04 | 4.60 |
| VOCl | 46.79 | 42.42 | 49.86 | 59.01 | 57.47 | 72.08 | 58.31 | 20.01 | 98.44 |
| Tetrachloro-eth ylene | 11.25 | 7.35 | 25.25 | 6.23 | 13.07 | 15.72 | 80.80 | 8.10 | 293.84 |
| Trichloro-ethylene | 48.26 | 131.34 | 29.79 | 47.60 | 88.78 | 51.72 | 62.92 | 20.63 | 216.15 |
| cis-dichloroethylene | 73.71 | 42.38 | 50.14 | 0.20 | 53.15 | 94.67 | 47.31 | 0.40 | 36.52 |
| trans-dichloroethylene | 98.99 | 37.34 | 43.29 | 28.64 | 33.97 | 52.12 | 39.84 | 19.23 | 21.15 |
| Dichloroethylenes | 73.74 | 42.35 | 50.12 | 81.76 | 53.02 | 94.40 | 47.31 | 63.33 | 36.46 |

The results obtained show the effectiveness of the injection. In the injection depths (10, 20, 25 metres) the decomposition of the contaminants is expressed, however, it can also be tracked in the spacing depths, which proves the movement of the small sized nanoparticles in the soil, which is otherwise heavy and thick. Beside this, the distribution of the contaminants is caused by the different density data of the contaminants, which results in the accumulation in the different segments of the soil.

### Industrial applicability

The ZVI nanoparticles according to the present disclosure are useful in a number of fields of the environmental technology, thus may be succesfully used for the decontamination of water, wastewaters or gas mixtures. By passing the nanoparticles directly under ground, chlorinated organic materials can effectively be decomposed. The technology is very promising in the field of immobilization of heavy metals (e.g. Cr(VI), Hg²⁺ and Ni²⁺) and radionuclides(UO₂²⁺), furthermore, may be used for the decontamination of poly-chlorinated byphenyls (PCB), pesticides (e.g. DDT), nitro-aromatic compounds or perchlorates. Among the decontaminated compounds there can be found solvents and chemical raw materials, such as perchloro-ethylene (PCE), trichloro-ethylene (TCE), carbon-tetrachloride (CT) and vinyl-chloride (VC) is. These materials pose a serious threat for the quality of the underground water, especially in the industrialized countries.

## Claims

1. A process for the preparation of an aqueous iron suspension comprising solid iron particles in the nanometer size range, **characterized in that** the following steps are taken:
a) an aqueous solution comprising as starting materials aqueous ferrous-sulphate (FeSO₄) or hydrated ferrous-sulphate (FeSO₄×7H₂O); sodium-ditionite (Na₂S₂O₄); sodium-borohydride (NaBH₄); sodium-hydroxide (NaOH) and hydrated copper-sulphate (CuSO₄×5H₂O) is prepared; and optionally one or more additive(s) selected from the group consisting of polyvinyl-pirrolidone, preferably PVP-K30 or PVP-K90, and as co-metal PdCl₂×2H₂O;
b) the reaction mixture according to step a) is reacted for 1 hour, optionally with stirring; and
c) the slurry-like product is obtained, and optionally the process is one or more times repeated.

2. The process according to Claim 1, **characterized in that** step a) is proceeded in such a way that
a) the ferrous-sulphate, previously or optionally during the dissolution bubbled with N₂ gas and optionally copper-sulphate is measured into a tank optionally equipped with stirrer and relief valve;
b) the sodium-hydroxide is measured into a tank optionally equipped with stirrer and relief valve, which is separated from the tank mentioned in point a);
c) the sodium-borohydride simultaneously with or separated in time from, preferably prior to the sodium-ditionite, is dissolved in a tank optionally equipped with stirrer and relief valve, optionally simultaneously with the steps according to points a) and b);
d) optionally the additives are added to the reaction mixture at any of steps a) to c);
e) following the dissolution according to points a) to d) the content of the tanks according to points a) to c) is transferred to an optionally stirred main reactor, preferably by pumping, preferably in such a way that first the ferrous-sulphate, and optionally the copper-sulphate, then the sodium-hydroxide, then, preferably a few minutes later, the solution according to point c) is charged into the main reactor;
f) the reaction mixture according to step e) is reacted for approximately 1 hour;
g) the reaction mixture according to step f) is transferred, preferably by pumping into an optionally stirred product tank, from where the product is preferably in one hour obtained; and
h) if desired, the steps according to points a) to f) are one or more times repeated.

## Patentansprüche

1. Ein Verfahren zur Herstellung der wässrigen Eisensuspension enthaltend feste Eisenpartikel im Nanometergrößenbereich, **dadurch gekennzeichnet, dass** folgende Schritte durchgeführt werden:
a) eine wässrige Lösung wird hergestellt, die als Ausgangsmaterialien wässriges Eisensulfat (FeSO₄) oder hydratisiertes Eisensulfat (FeSO₄×7H₂O); Natriumdithionit (Na₂S₂O₄); Natriumborhydrid (NaBH₄); Natriumhydroxid (NaOH) und hydratisiertes Kupfersulfat (CuSO₄×5H₂O) enthält; und gegebenenfalls ein oder mehrere Additive ausgewählt aus der Gruppe bestehend aus Polyvinylpyrrolidon, vorzugsweise PVP-K30 oder PVP-K90, und als Cometall PdCl₂×2H₂O;
b) das Reaktionsgemisch gemäß Schritt a) wird 1 Stunde lang, gegebenenfalls unter Rühren, umgesetzt; und
c) das schlammartige Produkt wird erhalten, und gegebenenfalls wird der Vorgang ein- oder mehrmals wiederholt.

2. Das Verfahren nach Anspruch 1, **dadurch gekennzeichnet, dass** Schritt a) durchgeführt wird, indem
a) das Eisensulfat, das zuvor oder gegebenenfalls während der Auflösung mit N₂-Gas durchgeblasen wurde, und gegebenenfalls Kupfersulfat in einen Tank eingemessen werden, der gegebenenfalls mit einem Rührer und einem Überdruckventil ausgestattet ist;
b) das Natriumhydroxid in einen Tank eingemessen wird, der gegebenenfalls mit einem Rührer und einem Überdruckventil ausgestattet ist, und der von dem unter Punkt a) genannten Tank separiert ist;
c) das Natriumborhydrid gleichzeitig damit oder zeitlich davon getrennt, vorzugsweise vor dem Natriumdithionit, in einem Tank, der gegebenenfalls mit einem Rührer und einem Überdruckventil ausgestattet ist, gegebenenfalls gleichzeitig mit den Schritten gemäß den Punkten a) und b) aufgelöst wird;
d) gegebenenfalls die Additive in einem der Schritte a) bis c) zum Reaktionsgemisch gegeben werden;
e) nach der Auflösung gemäß den Punkten a) bis d) der Inhalt der Tanks gemäß den Punkten a) bis c) in einen gegebenenfalls gerührten Hauptreaktor geleitet wird, vorzugsweise durch Pumpen, vorzugsweise indem zuerst das Eisensulfat und gegebenenfalls das Kupfersulfat, dann das Natriumhydroxid, dann, vorzugsweise einige Minuten später, die Lösung gemäß Punkt c) in den Hauptreaktor gefüllt wird;
f) das Reaktionsgemisch gemäß Schritt e) etwa 1 Stunde lang umgesetzt wird;
g) das Reaktionsgemisch gemäß Schritt f) vorzugsweise durch Pumpen in einen gegebenenfalls gerührten Produkttank geleitet wird, aus dem das Produkt vorzugsweise in einer Stunde erhalten wird; und
h) falls gewünscht die Schritte gemäß den Punkten a) bis f) ein- oder mehrmals wiederholt werden.

## Revendications

1. Procédé pour la préparation de la suspension aqueuse de fer comprenant des particules de fer solides de taille de l'échelle nanométrique, **caractérisé en ce que** les étapes suivantes sont effectuées:
a) préparer une solution aqueuse comprenant comme matières de départ du sulfate ferreux aqueux (FeSO₄) ou du sulfate ferreux hydraté (FeSO₄×7H₂O) ; du dithionite de sodium (Na₂S₂O₄) ; du borohydrure de sodium (NaBH₄) ; de l'hydroxyde de sodium (NaOH) et du sulfate de cuivre hydraté (CuSO₄×5H₂O) ; et éventuellement un ou plusieurs additifs choisis dans le groupe constitué par la polyvinylpirrolidone, de préférence PVP-K30 ou PVP-K90, et en tant que co-métal PdCl₂×2H₂O ;
b) faire réagir le mélange réactionnel selon l'étape a) pendant 1 heure éventuellement sous agitation ; et
c) obtenir le produit similaire à une boue, et éventuellement répéter le procédé une ou plusieurs fois.

2. Procédé selon la revendication 1, **caractérisé en ce que** l'étape a) est conduite de telle manière que
a) le sulfate ferreux, barboté préalablement ou éventuellement lors de la dissolution avec du gaz N_{2,} et éventuellement du sulfate de cuivre est dosé dans un réservoir éventuellement équipé d'un agitateur et d'une soupape de décharge ;
b) l'hydroxyde de sodium est dosé dans un réservoir éventuellement équipé d'un agitateur et d'une soupape de décharge, qui est séparé du réservoir mentionné au point a) ;
c) le borohydrure de sodium, simultanément avec ou séparé dans le temps, de préférence avant le dithionite de sodium, est dissous dans un réservoir éventuellement équipé d'un agitateur et d'une soupape de décharge, éventuellement simultanément aux étapes selon les points a) et b) ;
d) éventuellement, les additifs sont ajoutés au mélange réactionnel à l'une quelconque des étapes a) à c);
e) suite à la dissolution selon les points a) à d) le contenu des réservoirs selon les points a) à c) est transféré dans un réacteur principal éventuellement agité, de préférence par pompage, de préférence de telle sorte que tout d'abord le sulfate ferreux, et éventuellement le sulfate de cuivre, puis l'hydroxyde de sodium, puis, de préférence quelques minutes plus tard, la solution selon le point c) est chargée dans le réacteur principal ;
f) on fait réagir le mélange réactionnel selon l'étape e) pendant environ 1 heure ;
g) le mélange réactionnel selon l'étape f) est transféré, de préférence par pompage dans une cuve de produit éventuellement agitée, d'où le produit est de préférence obtenu en une heure ; et
h) si on le souhaite, les étapes selon les points a) à f) sont répétées une ou plusieurs fois.
